# FASCICULE DE BREVET EUROPEEN

(11) **EP 0 505 255 B1**
(45) Date de publication et mention de la délivrance du brevet: **17.05.1995**
(21) Numéro de dépôt: 92400689.3
(22) Date de dépôt: 16.03.1992
(51) Int. Cl.: B60S 1/34

(54) **Dispositif de lave-glace, notamment pour surface vitrée de véhicule automobile**
Scheibenwaschanlage, insbesondere für Kraftfahrzeugscheibenoberfläche
Window washing device, in particular for automotive vehicle glass surface

(30) Priorité: 22.03.1991 FR 9103491
(43) Date de publication de la demande: 23.09.1992
(73) Titulaire: VALEO SYSTEMES D'ESSUYAGE, 78180 Montigny-Le-Bretonneux (FR)
(72) Inventeur: Gagneux, Georges, F-86100 Chatellerault (FR)
(74) Mandataire: Gamonal, Didier

(56) Documents cités:
- EP-A- 0 207 364
- EP-A- 0 272 480
- EP-A- 0 323 817
- EP-A- 0 351 527
- DE-A- 3 916 946
- US-A- 3 230 564

## Description

La présente invention se rapporte à un dispositif de lave-glace, notamment pour surface vitrée de véhicule automobile, du type divulgué par DE-A-3 916 946.

Il est connu, notamment par le document DE-A-3 102 538, un dispositif de lave-glace constitué d'un arbre de commande creux relié, à l'une de ses extrémités, à un dispositif de projection d'un liquide de lave-glace sur une surface vitrée telle qu'un pare-brise de véhicule automobile et, à l'autre de ses extrémités, à un circuit de lave-glace constitué généralement de conduites souples associées à une pompe de lave-glace et à un réservoir de fluide de lave-glace.

Comme décrit dans la demande précitée, cet arbre est relié fixement à l'une de ses extrémités à un bras d'essuie-glace auquel est raccordé un balai d'essuie-glace apte à balayer la surface vitrée sur laquelle est projeté le liquide de lave-glace, balayage réalisé grâce à un mouvement de rotation alternatif transmis par l'intermédiaire d'une bielle de commande reliée fixement à l'arbre et faisant partie d'un mécanisme de commande d'essuie-glace, constitué par exemple d'un moteur électrique et d'un système bielle manivelle.

L'arbre creux de commande est relié, soit directement, soit indirectement,à l'extrémité portant le bras d'essuie-glace, à un dispositif de projection de liquide tel qu'un gicleur porté par l'essuie-glace et l'autre extrémité de cet arbre creux est connecté de manière fixe à une conduite souple faisant partie du circuit de lave-glace.

La connexion entre l'extrémité de l'arbre creux de commande et la conduite souple est effectué par l'intermédiaire d'une pièce de raccordement de forme générale en "L".

La pièce de raccordement est une pièce tubulaire creuse dont l'une des branches creuse, celle horizontale, est reliée à la conduite souple et dont l'autre des branches creuse, la branche verticale, comporte à l'intérieur de son volume creux, un bourrelet venant coopérer avec une gorge annulaire portée par cet arbre de manière à assurer la fixation et l'étanchéité de cette pièce de connexion avec ladite extrémité de l'arbre.

Ce dispositif, bien que donnant satisfaction, présente néanmoins quelques inconvénients non négligeables.

En effet, comme précédemment mentionné, l'arbre de commande est entraîné en un mouvement de rotation alternatif et la conduite souple est donc entraînée à participer à ce mouvement.

Pendant ce mouvement, il peut arriver que la pièce de raccordement ne suive pas le mouvement de l'arbre et reste dans sa position en frottant sur l'extrémité de l'arbre creux de commande et cette pièce de raccordement peut donc s'user par frottement et générer une perte de contact entre le bourrelet et la gorge annulaire, ce qui procure en final une perte d'étanchéité de l'extrémité de l'arbre avec la pièce de raccordement.

De plus, l'élaboration de cette pièce de raccordement creuse est compliquée par la présence du bourrelet d'étanchéité qui nécessite un moulage assez compliqué.

La présente invention se propose de remédier aux inconvénients précités, en proposant un dispositif de lave-glace, et plus particulièrement une pièce de raccordement de conception très simple, et qui interdit un éventuel glissement de cette pièce autour de l'extrémité de l'arbre pendant le mouvement de rotation alternatif de celui-ci.

Selon la présente invention, un dispositif de lave-glace, notamment pour surface vitrée de véhicule automobile, comportant un arbre de commande creux raccordé à un circuit de lave-glace par une pièce de raccordement ainsi qu'un moyen d'immobilisation en rotation de la pièce de raccordement par rapport à l'arbre (Dispositif du type divulgué par DE-A-3 916 946) est caractérisé en ce le moyen d'immobilisation en rotation est excentré par rapport à l'arbre, et en ce que le moyen d'immobilisation consiste en des moyens à coopération de formes constitués par un pion coopérant avec une ouverture.

Grâce à l'invention, la pièce de raccordement sera entraînée conjointement en un mouvement de rotation alternatif avec l'arbre de commande et, de ce fait, ne sera pas entraîné à glisser par rapport à celui-ci.

Des modes de réalisation de l'invention sont précisés dans les revendications 2 à 7 dépendantes.

Les autres caracteristiques et avantages de la description vont ressortir maintenant de la description qui va suivre, en se référant aux dessins annexés sur lesquels :
- la figure 1 est une vue en coupe partielle d'un dispositif de lave-glace selon l'invention ;
- la figure 2 est une vue selon la flèche F de la figure 1 et à partir de laquelle est réalisée, selon la ligne AA, la figure 1 ;
- la figure 3 montre une vue en coupe d'un autre élément du dispositif de lave-glace, selon l'invention, comportant une variante.

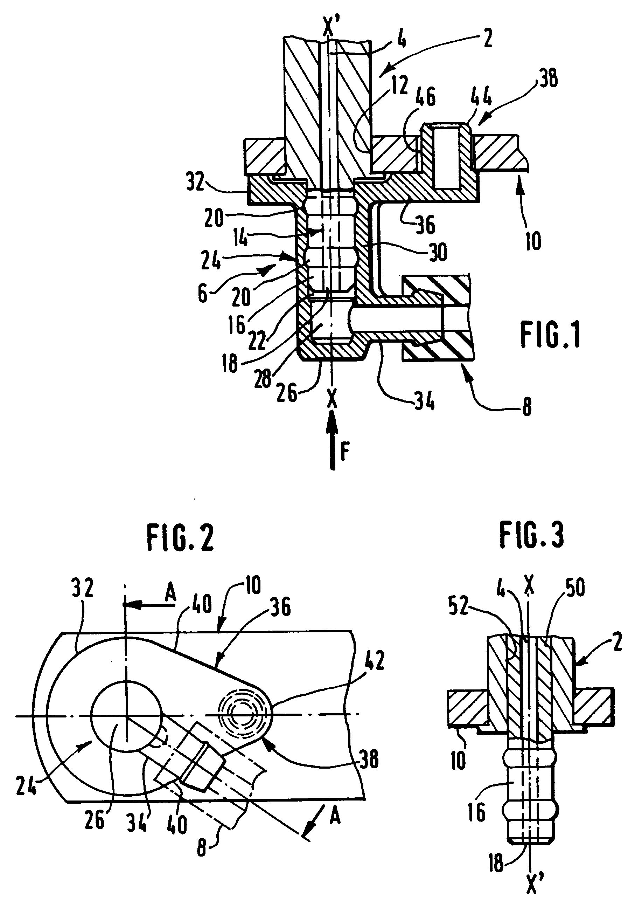

En se référant aux figures 1 et 2, un arbre de commande 2 comporte un canal de lave-glace 4 coaxial à l'axe XX' de l'arbre de commande de façon à former un arbre de commande creux.

Cet arbre de commande est relié à l'une de ses extrémités (non représentée) à un bras d'essuie-glace portant à articulation un balai d'essuie-glace apte à balayer une surface vitrée telle qu'un pare-brise de véhicule automobile.

Cet arbre de commande est relié à son autre extrémité par une pièce de raccordement 6 à une conduite souple 8 faisant partie d'un circuit de lave-glace, généralement constitué d'une pompe de lave-glace associée à un bocal de lave-glace.

L'arbre de commande 2 est entraîné en un mouvement de rotation alternatif par l'intermédiaire d'une manivelle 10 reliée directement ou indirectement à un moteur d'essuyage.

Comme représenté sur les figures, la manivelle 10 présente un alésage 12 dans lequel est introduit l'arbre 2, de manière à ce que celui-ci soit relié fixement avec ladite manivelle.

L'extrémité de l'arbre de commande 2 opposée à celle portant le bras d'essuie-glace présente un élément de raccordement 14 apte à venir coopérer avec la pièce de raccordement 6.

L'élément de raccordement se présente sous la forme d'une partie tubulaire 16 de plus petit diamètre que l'arbre de commande 2, en étant monobloc avec cet arbre et en portant le débouché 18 du canal 4.

Cette partie tubulaire 16 porte en outre deux bourrelets circulaires 20 disposés sensiblement perpendiculairement à l'axe XX' conjoint à l'arbre 2 et à la partie tubulaire 16, bourrelets disposés à distance l'un de l'autre et dont le rôle sera explicité par la suite.

Cette partie tubulaire 16 est apte à venir coopérer avec une cavité 22 portée par la pièce de raccordement 6.

Cette cavité 22 est formée par un pot 24 coaxial à l'axe XX' passant par l'arbre de commande 2, en étant formée par une paroi de fond 26 disposée à distance du débouché 18 du canal 4 en créant une cavité 28, ledit fond se poursuivant par une paroi tubulaire 30 venant entourer la partie tubulaire 16 et se terminant par une collerette 32 saillante extérieurement en étant disposée sensiblement perpendiculaire à la paroi tubulaire 30.

Le pot 24 présente en outre une tubulure de raccordement 34 permettant de mettre en communication la conduite 8 avec le débouché 18 du canal 4 par l'intermédiaire de la cavité 28.

En se référant conjointement à la figure 2, la collerette radiale se poursuit dans une direction, celle de la manivelle 10, par un prolongement 36 portant un moyen d'immobilisation 38 de la pièce de raccordement 6 avec l'arbre de commande 2, ce moyen d'immobilisation étant excentré par rapport à l'axe XX' de l'arbre 2 et, par conséquent, du pot 24.

Comme visible sur les figures, le prolongement 36 est une continuité de la collerette radiale 32 et est de forme générale triangulaire dont les côtés 40 sont raccordés à la périphérie externe de la collerette et dont la pointe émoussée 42 de cette forme triangulaire porte à son voisinage le moyen d'immobilisation 38.

Le moyen d'immobilisation 38 est constitué par des moyens à coopération de formes et consiste en un pion 44 saillant sensiblement perpendiculairement à partir du prolongement 36 et dans la direction opposée à celle du pot portant la tubulure de raccordement 34, ce pion 44 se présentant sous la forme d'un pion sensiblement cylindrique venant coopérer avec une ouverture 46, également de forme cylindrique, prévue sur la manivelle 10 en correspondance avec ce pion.

Bien entendu, et cela sans sortir du cadre de l'invention, il peut être prévu que le pion 44 soit porté directement par la collerette 32 en étant disposé excentriquement par rapport à l'axe du pot 24.

De même, il peut être prévu que le pion soit formé par une saillie à partir de la manivelle 10 et venant coopérer avec une ouverture portée par la collerette ou le prolongement de celle-ci.

En se référant à la figure 3 maintenant, il peut être remarqué que la partie tubulaire 16 est une pièce distincte de l'arbre de commande 2 tout en étant coaxial avec celle-ci.

La partie tubulaire 16 fait partie d'un tube de lave-glace 50 qui est introduit à l'intérieur d'un alésage 52 coaxial à l'axe XX' de l'arbre 2, ce tube 50 portant le canal de lave-glace 4 avec son débouché 18 comme précédemment décrit.

En se reportant maintenant aux figures 1 et 2, le montage de la pièce de raccordement 6 est effectué de la manière suivante.

L'arbre de commande 2 avec sa partie tubulaire 16 saillante au-delà de la manivelle 10 est présenté en vis-à-vis de l'évidement 22 que présente le pot 24.

Cette partie tubulaire 16 est emmanchée à force à l'intérieur de la cavité 22, ce qui est rendu possible par la matière constitutive de la paroi tubulaire 30 qui est une matière élastique et, lors de cet enfoncement, les bourrelets 30 viennent augmenter le diamètre interne de la cavité 22 en permettant ainsi le maintien axial du pot 24 autour de la partie tubulaire 16 par serrage.

Comme visible sur la figure 1, dans la position finale, la pièce de raccordement 6 prend appui par sa collerette 32 sur la face en regard de la manivelle 10, et le pion d'immobilisation 44 coopère avec l'ouverture 46 prévue dans la manivelle.

Ainsi, en fonctionnement, la manivelle 10 génère un mouvement de rotation alternative qui est transmis à l'arbre de commande 2 et, pendant ce mouvement, la pièce de raccordement 6 ne peut que suivre ce mouvement de rotation alternative de par la présence du moyen d'immobilisation excentré que présente cette pièce.

Avantageusement, et comme cela a été mentionné en relation avec la figure 3, la pièce de raccordement 6 sert aussi de pièce d'immobilisation en déplacement axial du tube de lave-glace 50 par ancrage des bourrelets 20 que cette pièce présente avec la paroi tubulaire 30 du pot 24.

## Revendications

1. Dispositif de lave-glace, notamment pour surface vitrée de véhicule automobile, comportant un arbre de commande creux (2) raccordé à un circuit de lave-glace (8) par une pièce de raccordement (6) ainsi qu'un moyen d'immobilisation en rotation (38) de la pièce de raccordement (6) par rapport à l'arbre (2), caractérisé en ce que le moyen d'immobilisation en rotation (38) est excentré par rapport à l'arbre (2), et en ce que le moyen d'immobilisation (38) consiste en des moyens à coopération de formes (44,46) constitués par un pion (44) coopérant avec une ouverture (46).

2. Dispositif de lave-glace selon la revendication 1, caractérisé en ce que les moyens de coopération de formes (44,46) sont portés respectivement par la pièce de raccordement (6) et une manivelle (10) liée fixement à l'arbre de commande (2).

3. Dispositif de lave-glace selon la revendication 1, caractérisé en ce que le pion (44) est situé sur une collerette (32) que présente la pièce de raccordement (6).

4. Dispositif de lave-glace selon la revendication 1, caractérisé en ce que le pion (44) est porté par un prolongement (36) issu de la collerette (32).

5. Dispositif de lave-glace selon la revendication 4, caractérisé en ce que le prolongement (36) est de forme générale triangulaire, dont les côtés (40) sont raccordés à la périphérie de la collerette (32).

6. Dispositif de lave-glace selon la revendication 1, caractérisé en ce que la pièce de raccordement (6) présente une paroi tubulaire (30) élastique.

7. Dispositif de lave-glace selon la revendication 6, caractérisé en ce que l'arbre de commande (2) présente une partie tubulaire (16) portant au moins un bourrelet (30) apte à coopérer avec la paroi tubulaire (30).

## Claims

1. A windscreen washer device, in particular for a glazed surface in a motor vehicle, comprising a hollow driving shaft (2) connected to a windscreen washer circuit (8) by a connecting piece (6) and also a rotational locking means (38) for the connecting piece (6) in relation to the shaft (2),
**characterised in that** the rotational locking means (38) is eccentric in relation to the shaft (2),
**and in that** the locking means (38) consists of shape-cooperation means (44, 46) formed by a pin (44) cooperating with an aperture (46).

2. A windscreen washer device according to Claim 1,
**characterised in that** the shape-cooperation means (44, 46) are borne respectively by the connecting piece (6) and a crank (10) securely connected to the driving shaft (2).

3. A windscreen washer device according to Claim 1,
**characterised in that** the pin (44) is situated on a flange (32) which the connecting piece (6) has.

4. A windscreen washer device according to Claim 1,
**characterised in that** the pin (44) is borne by an extension (36) protruding from the flange (32).

5. A windscreen washer device according to Claim 4,
**characterised in that** the extension (36) has a general triangular shape, the sides (40) of which are connected to the periphery of the flange (32).

6. A windscreen washer device according to Claim 1,
**characterised in that** the connecting piece (6) has an elastic tubular wall (30).

7. A windscreen washer device according to Claim 6,
**characterised in that** the driving shaft (2) has a tubular part (16) bearing at least one collar (30) suitable for cooperating with the tubular wall (30).

## Patentansprüche

1. Scheibenwaschanlage, insbesondere für die Scheibenoberfläche von Kraftfahrzeugen, die eine Antriebshohlwelle (2) umfaßt, die über ein Anschlußstück (6) mit einem Scheibenwaschsystem (8) verbunden ist, sowie ein Mittel (38) für die Drehsicherung des Anschlußstücks (6) im Verhältnis zur Welle (2), **dadurch gekennzeichnet,** daß das Drehsicherungsmittel (38) im Verhältnis zur Welle (2) außermittig angeordnet ist und daß das Sicherungsmittel (38) aus formschlüssigen Mitteln (44, 46) besteht, die durch einen Stift (44) gebildet werden, der mit einer Öffnung (46) zusammenwirkt.

2. Scheibenwaschanlage nach Anspruch 1, **dadurch gekennzeichnet,** daß die formschlüssigen Mittel (44, 46) an dem Anschlußstück (6) bzw. an einer Kurbel (10) angebracht sind, die fest mit der Antriebswelle (2) verbunden ist.

3. Scheibenwaschanlage nach Anspruch 1, **dadurch gekennzeichnet,** daß sich der Stift (44) auf einem Kragen (32) befindet, der an dem Anschlußstück (6) vorgesehen ist.

4. Scheibenwaschanlage nach Anspruch 1, **dadurch gekennzeichnet,** daß der Stift (44) an einer Verlängerung (36) angeordnet ist, die aus dem Kragen (32) hervorgeht.

5. Scheibenwaschanlage nach Anspruch 4, **dadurch gekennzeichnet,** daß die Verlängerung (36) eine allgemeine Dreiecksform aufweist, deren Seiten sich an die Peripherie des Kragens (32) anschließen.

6. Scheibenwaschanlage nach Anspruch 1**, dadurch gekennzeichnet,** daß das Anschlußstück (6) eine elastische rohrförmige Wand (30) aufweist.

7. Scheibenwaschanlage nach Anspruch 6, **dadurch gekennzeichnet,** daß die Antriebswelle (2) einen rohrförmigen Abschnitt (16) aufweist, an dem sich mindestens ein Wulst (20) befindet, der mit der rohrförmigen Wand (30) zusammenwirken kann.
